# FASCICULE DE BREVET EUROPEEN

(11) **EP 2 548 764 B1**
(45) Date de publication et mention de la délivrance du brevet: **24.06.2015**
(21) Numéro de dépôt: 12177365.9
(22) Date de dépôt: 20.07.2012
(51) Int. Cl.: B60P 1/02, B60P 1/44, B60P 3/12, B60D 1/173, B60D 1/30, B62D 63/06, B60D 1/54

(54) **Dispositif d'aide au chargement**
Hilfsvorrichtung zum Beladen
Loading aid device

(30) Priorité: 22.07.2011 FR 1156661; 07.11.2011 FR 1160075; 22.07.2011 FR 1156662; 07.11.2011 FR 1160076
(43) Date de publication de la demande: 23.01.2013
(73) Titulaire: Yo Concept, 35370 Gennes sur Seiche (FR)
(72) Inventeur: Orhant, Yves, 35370 GENNES SUR SEICHE (FR)
(74) Mandataire: Vidon Brevets & Stratégie

(56) Documents cités:
- US-A- 3 033 593
- US-A1- 2010 181 743
- US-B1- 6 290 248

## Description

### 1 DOMAINE DE L'INVENTION

La présente invention concerne un dispositif d'aide au chargement de véhicule deux roues ou de charges diverses sur remorque. L'invention se rapporte plus particulièrement à un dispositif permettant de faciliter la mise en place d'un ou plusieurs véhicules à deux roues (comme par exemple une moto ou un scooter), sur une remorque attelée prévue à cet effet.

La présente invention se rapporte également à un dispositif d'aide au contrôle et à la manoeuvre de remorque.

### 2 SOLUTIONS DE L'ART ANTERIEUR

En l'état actuel de la technique, il n'existe pas de nombreuses manières de transporter des véhicules à deux roues comme des motos ou des scooters. La manière la plus simple est d'utiliser une remorque, à fond plat comprenant un ou plusieurs rails (en fonction du nombre de motos à transporter). Les rails sont le plus souvent positionnés sur le fond plat de la remorque dans le sens de déplacement de la remorque.

Pour charger la moto sur la remorque, il est nécessaire de suivre la succession d'étapes suivantes :
- positionner un rail amovible en face du rail sur lequel la moto sera fixée une fois montée ;
- positionner la moto en face du rail ;
- moteur allumé et première vitesse enclenchée, monter la moto doucement mais d'un seul coup afin de ne pas devoir retenir celle-ci en pleine montée ;
- si la manoeuvre échoue, redescendre, et recommencer.

Ainsi, à ce jour les utilisateurs de remorques légères par exemple les campings caristes pour le transport de charges telles que moto, scooter, bagages, etc. sont confrontés à une difficulté importante: la mise en place manuelle de charges lourdes (supérieure à 50kg) notamment moto, scooter nécessite le plus souvent la présence de deux (ou trois) personnes et/ou l'utilisation du moteur du véhicule lors de la montée sur la rampe d'accès, ce qui pose des problèmes de sécurité dus par exemple au risque de ripage ou de glissage sur la rampe, déséquilibre et chute du véhicule, ou encore accélération incontrôlée avec risque de blessure du conducteur et/ou de son assistant.

Il existe donc un besoin de fournir un dispositif d'aide au chargement qui permette de sécuriser celui-ci et de diminuer les efforts à accomplir par l'utilisateur.

À ce jour les utilisateurs de remorques légères pour le transport de charges sont également confrontés à quatre problèmes principaux :
- les manoeuvres en marche arrière sont très difficiles à effectuer sans visibilité : les manoeuvres de braquages sont incontrôlées, la remorque entre en contact avec le véhicule tracteur par exemple ;
- le deuxième problème se rapporte au contrôle pendant le roulage, qui est difficile. En effet les remorques légères ne sont généralement peu ou pas visibles par le conducteur, à l'arrière du véhicule tracteur, particulièrement lorsqu'il s'agit de fourgon ou de camping-car. Les crevaisons non détectées peuvent avoir des conséquences sur la sécurité des autres usagés : projectiles de morceaux de pneus ou de jante, déséquilibre de la charge, arrêt immédiat en zone non protégée.
- le troisième problème est relatif à l'instabilité en charge : certaines charges telles qu'une moto ou un scooter possèdent un centre de gravité placé assez haut notamment sur les remorques habituelles légères. Les roues (généralement de taille réduite), et les suspensions de ces remorques sont donc soumises à des contraintes importantes notamment lors des mouvements de roulis.
- les roues des remorques pivotantes sont soumises à un phénomène de guidonnage, certaines sont donc équipées d'un dispositif de freins sur le ou les pivots, mais ce système nécessite des réglages réguliers en fonction de l'usure, de la charge, sous peine d'usure prématurée des pneus.

Pour pallier le premier problème rencontré, il existe des remorques avec roues pivotante et attelage bridé, (ex demande de brevet FR2940629 et brevet US5520404), mais ces remorques possèdent deux points d'attelage ce qui entraîne des contraintes importantes sur les éléments de suspensions de la remorque car les mouvements de roulis du véhicule tracteur sont retransmis intégralement à la remorque.

Pour pallier le deuxième problème rencontré, il existe des systèmes de détection de crevaison, mais ils sont onéreux et n'équipent généralement pas le type de remorque précité. Un dispositif de chargement selon le préambule de la revendication 1 est divulgué dans document US 5,456,564 A1.

Il existe donc un besoin de fournir un dispositif qui d'une part permette de réaliser un transport de charge en toute sécurité tout en facilitant la manoeuvre et le roulage.

### 3 RESUME DE L'INVENTION

Le dispositif selon l'invention permet de remédier aux inconvénients précités, tout en permettant le chargement par une seule personne.

Il se présente sous la forme d'un dispositif de chargement selon la revendication 1.

Selon l'invention, lesdits moyens de déplacement dudit berceau comprennent au moins une paire de liaisons pivots comprenant une liaison pivot basse (R1) sensiblement proche de ladite base de chargement (R3) et une liaison pivot haute (R2) sensiblement proche de la partie supérieure dudit berceau (R), des moyens de solidarisation (GB, PB) dudit berceau (R) à ladite structure de support (A) par l'intermédiaire de ladite paire de liaisons pivots (R1, R2), le maintien de l'orientation dudit berceau lors du passage entre lesdites positions étant assuré en effectuant un mouvement de rotation desdits moyens de solidarisation (GB, PB), lesquels provoquent un mouvement de translation du berceau par l'intermédiaire de ladite paire de liaisons pivots.

Selon l'invention, le dispositif comprend en outre un chariot (C) mobile en translation par rapport au support (A), ledit chariot étant solidarisé au berceau (R) par l'intermédiaire de ladite liaison pivot basse (R1) et solidarisé auxdits moyens de solidarisation (PB) par l'intermédiaire d'une liaison pivot complémentaire (R5).

Selon l'invention le chariot (C) se déplace sur des galets (G) et est guidé latéralement par lesdits galets (G) lors du déplacement entre lesdites positions.

Selon l'invention le déplacement entre lesdites positions est mis en oeuvre par l'intermédiaire d'un treuil.

L'invention concerne également une remorque de transport de charges destinée à être attelée avec un véhicule, ladite remorque comprenant un châssis comprenant un attelage central standard (AS) fixé sur un timon central (AT).

Selon l'invention, ladite remorque comprend en outre une liaison avec ledit véhicule par l'intermédiaire d'au moins une biellette à rotules (BR), ladite biellette à rotule comprenant à chacune de ses extrémités une liaison pivot (Ip1, lp2), ladite biellette à rotule étant sensiblement parallèle à l'axe dudit timon central et n'autorisant qu'un mouvement vertical dudit châssis par rapport audit véhicule.

Ainsi, l'invention assure qu'aucun mouvement de lacet ne pourra survenir lors de l'utilisation de la remorque, mais également que les mouvements de roulis pourront être transmis à la remorque indépendamment des mouvements de roulis du véhicule tracteur. Il n'y a ainsi pas de force inadéquate exercée sur le châssis de la remorque.

Selon une caractéristique particulière, ladite remorque comprend en outre au moins deux ensembles roulants à suspensions (S), chacun fixé à une extrémité d'un essieu (E) dudit châssis, un ensemble roulant à suspension (S) comprenant un pivot de rotation (S1) dudit ensemble roulant, ledit pivot de rotation (S1) étant incliné d'un angle α par rapport à l'axe vertical.

Selon une caractéristique particulière, chacun desdits ensembles roulant à suspension (S) possède deux roues jumelées (S4) disposées de part et d'autre du bras de suspension (S2) et un combiné ressort/amortisseur central (S5).

Selon un mode de réalisation particulier, l'angle α est compris entre 5° et 10°.

Selon un mode de réalisation particulier, l'angle α est sensiblement égal à 7°.

### 4 LISTE DES FIGURES

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :

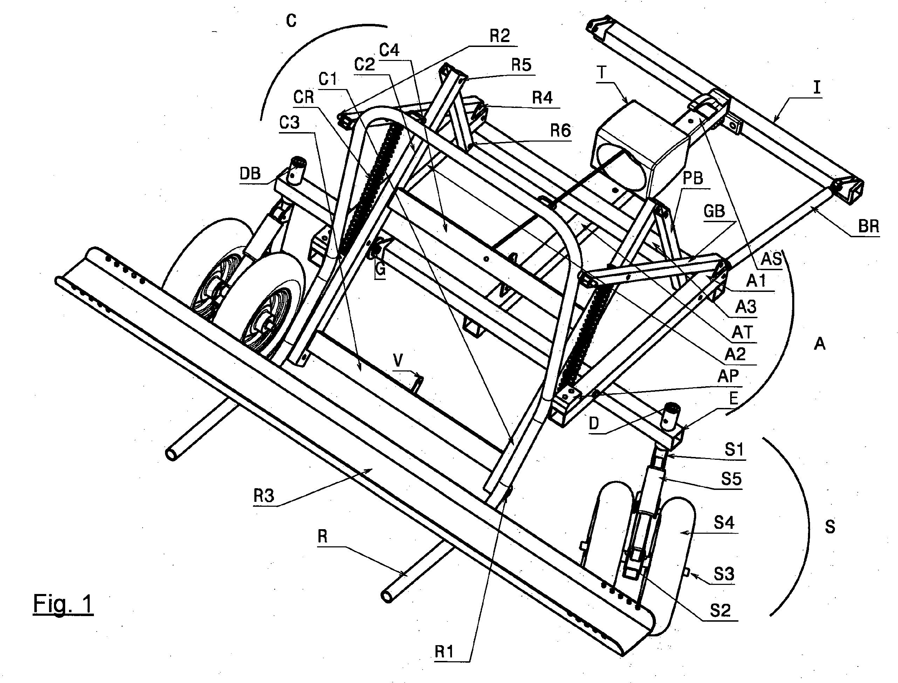

- La figure 1 représente la remorque vue de ¾ arrière ;
- La figure 2 représente la remorque en position route ;
- La figure 3 représente la remorque en position début de chargement, avec seuil de chargement au sol ;
- La figure 4 représente la remorque en position en cours de chargement ;
- Les figures 5, 6 et 7 représentent un deuxième mode de réalisation du dispositif selon l'invention dans lequel la charge est positionnée selon le même axe que l'axe de déplacement de la remorque sur laquelle le dispositif est positionné.
- la figure 8 représente la remorque vue de ¾ arrière ;
- la figure 9 est une vue de côté de la remorque avec l'angle de chasse α entre l'essieu et le châssis dans un mode de réalisation ;
- la figure 10 est une vue d'un des ensembles roulants à suspension ;
- la figure 11 est une vue du support intermédiaire qui est fixé sur l'attelage du véhicule tracteur si celui-ci ne peut recevoir directement la biellette.

### 5 DESCRIPTION DETAILLEE DE L'INVENTION

### 5.1. Présentation générale du dispositif de chargement à monter sur une remorque

Comme exposé préalablement, le dispositif comprend une structure de support (qui peut être la structure roulante ou une autre structure solidarisée à la structure roulante destinée à être attachée à un véhicule par l'intermédiaire d'un attache-remorque). Le dispositif comprend également un berceau (également appelé rambarde R) comprenant une base de chargement permettant de charger un véhicule à deux roues ou d'autres charges. Le berceau est mobile par rapport à la structure de support et peut se mouvoir entre deux positions : une première position de chargement, dans laquelle la base du berceau repose sur le sol pour permettre le chargement ; une deuxième position de roulage, dans laquelle le berceau est porté sur la structure roulante. Le passage de la première position à la deuxième position est réalisé en maintenant l'orientation du berceau constante. Cela signifie que l'orientation, par rapport au sol, du berceau est fixe et que la base du berceau reste parallèle au sol.

Ainsi, l'invention permet de réaliser un chargement sans difficulté et notamment sans qu'il soit nécessaire d'utiliser le moteur du véhicule à deux roues à charger par exemple. L'invention propose ainsi une solution de chargement bien plus sure que les solutions proposées dans l'art antérieur.

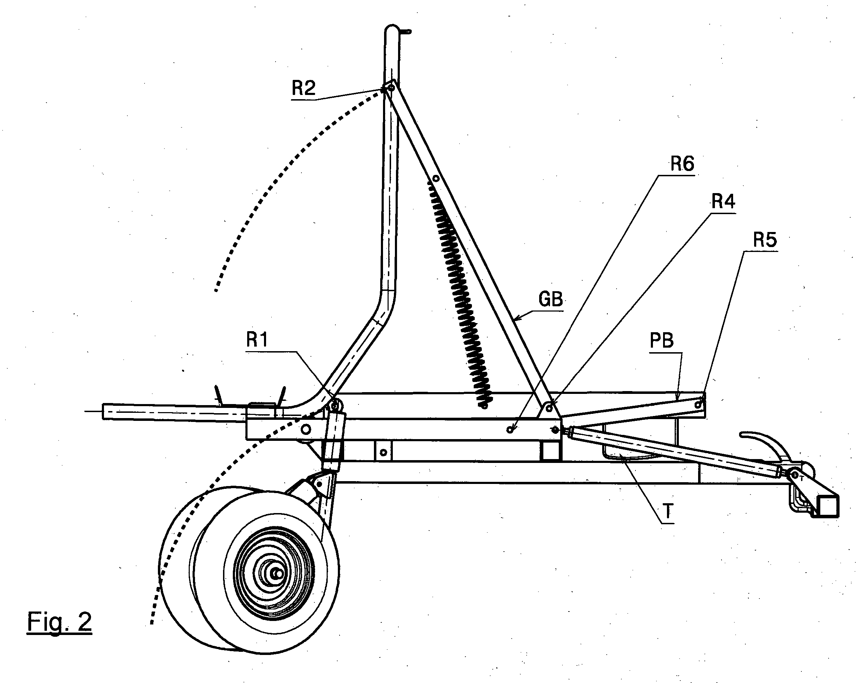

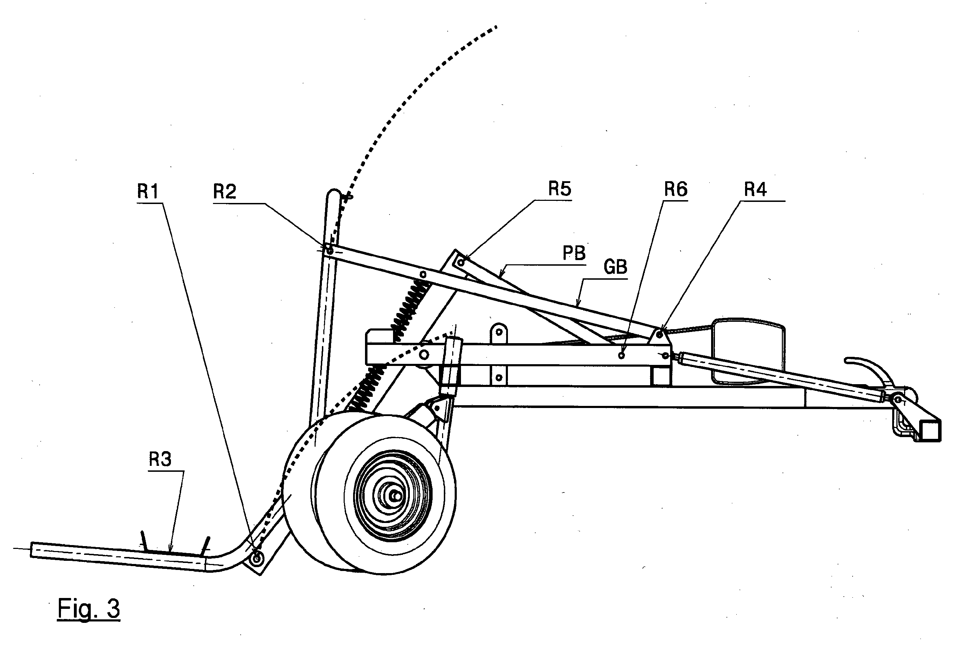

L'orientation du berceau est rendue constante, dans un mode de réalisation de l'invention, par la mise en oeuvre d'une translation du berceau par rapport à la structure roulante. Cette translation permet de modifier la position du berceau sans en changer l'orientation. Plus particulièrement, le berceau est relié à la structure roulante par quatre liaisons pivots (deux paires de liaisons pivot situées respectivement sur le côté droit du berceau et sur le côté gauche du berceau). Pour chaque paire de liaison pivot, une liaison pivot est située à la base du berceau, sensiblement proche de la base de chargement de celui-ci. Une autre liaison pivot est située au niveau de la partie supérieure du berceau. Ces quatre liaisons pivot (deux de chaque côté) permette de mouvoir le berceau tout en conservant une orientation identique de celui-ci. Plus spécifiquement, le berceau effectue un mouvement d'arc de cercle entre la première et la deuxième position, comme cela est explicité sur les figures 2 à 4 (pointillés).

Le dispositif de l'invention est décrit par la suite selon un mode de réalisation particulier.

### 5.2. Présentation d'un mode de réalisation du dispositif de chargement à monter sur une remorque

Pour des raisons de clarté des dessins, les éléments tels que boulonnerie, câbles électrique, feux de route, plaque d'immatriculation, roue jockey, mousses de protection, sangles d'arrimage et véhicule tracteur ne figurent pas sur les figures.

En référence à ces figures, le dispositif se présente plus particulièrement, dans un premier mode de réalisation de l'invention, sous la forme d'une structure roulante comprenant un chariot (C) porté par un châssis (A). Le châssis (A) comprend un timon central (AT), deux longerons, un longeron droit (A1) et un longeron gauche (A2), un essieu (E) et une traverse avant (A3). Le timon central (AT) reçoit la tête d'attelage standard normalisée (AS) qui se verrouille sur une boule d'attelage du commerce également standard.

Le chariot (C) comprend pour sa part un berceau (R), également appelé rambarde, sur lequel est fixée une plateforme de chargement (R3) qui peut être adaptée à la charge à transporter, par exemple plateforme pour bagages, ou rail (comme présenté sur la figure) pour les véhicules deux ou trois roues.

Le chariot (C) comprend également un cadre comprenant deux longerons, un longeron droit (C1), un longeron gauche (C2). Ces deux longerons sont reliés entre eux par deux traverses, une traverse supérieure (C4) et une traverse inférieure (C3) afin de former le cadre de forme sensiblement rectangulaire. Ce cadre est solidarisé au berceau (R) par l'intermédiaire de deux liaisons pivot inférieures (R1) qui permettent un mouvement de rotation du cadre par rapport au berceau autour d'un axe formé par les deux liaisons pivot inférieure (R1). Ces deux liaisons pivot (R1) sont situées approximativement au niveau de la traverse inférieure (C3) du cadre.

Ce mouvement, comme cela le sera exposé par la suite, permet au berceau de passer d'une première position de chargement du véhicule à deux roues ou de la charge (position de chargement dans laquelle le berceau est posé sur le sol) à une deuxième position de roulage (dans laquelle le berceau est porté sur le châssis). Le passage de cette première à cette deuxième position est effectué par l'intermédiaire d'un mouvement de rotation du cadre tout en maintenant une orientation prédéterminée au berceau.

Outre les deux liaisons pivot inférieures (R1), le berceau (R) est solidarisé au châssis (C) par l'intermédiaire de deux biellettes (GB). Chaque biellette (GB) se situe de part et d'autre du berceau (R). Chacune de ces deux biellettes (GB) comprend deux liaisons pivot : une première liaison pivot permettant de solidariser le berceau et la biellette et une deuxième liaison pivot permettant de solidariser la biellette au châssis (C).

La double solidarisation du berceau (R) au cadre d'une part (par l'intermédiaire des liaisons pivot inférieures R1) et au châssis d'autre part (par l'intermédiaire des liaisons pivot supérieures R2) permet, selon l'invention de maintenir une orientation fixe du berceau (R) pendant les opérations de chargement (montée du berceau) et de déchargement (descente du berceau).

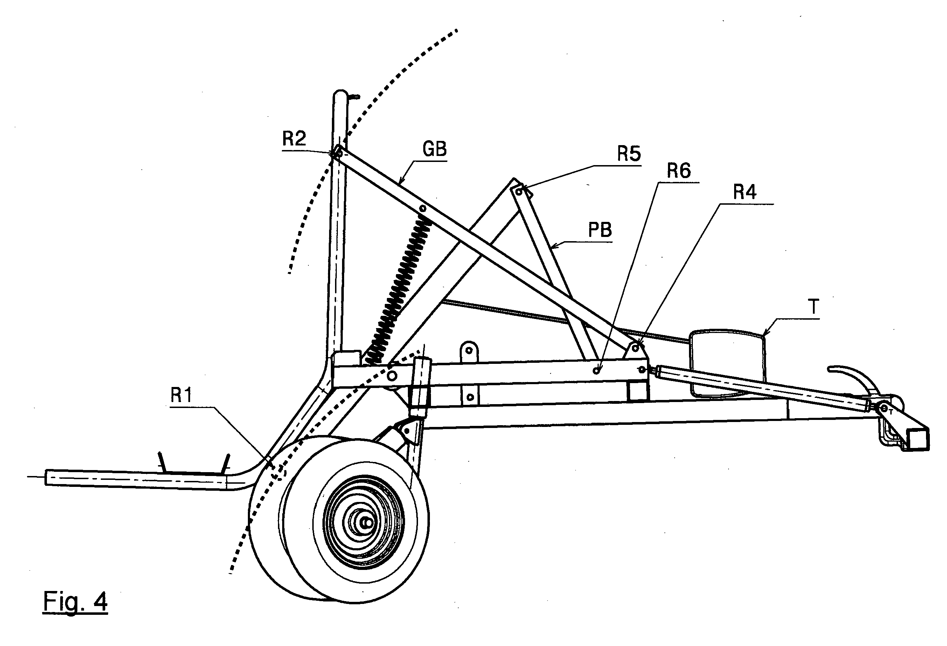

Plus particulièrement, lors du mouvement du berceau, les biellettes (GB) décrivent un mouvement d'arc de cercle autour de la liaison pivot (R4) et la partie inférieure du cadre qui est solidarisée avec le berceau (par l'intermédiaire des liaisons pivot inférieures R1) décrit un mouvement d'arc de cercle semblable. Ces deux mouvements sont matérialisés en figure 4 par des pointillés. Ces deux mouvements simultanés permettent au berceau (R) de conserver une orientation fixe lors du mouvement.

Selon un mode de réalisation de l'invention, le mouvement du cadre est contraint par l'intermédiaire de deux biellettes (PB) qui solidarisent le cadre au châssis. Plus particulièrement, les biellettes (PB) sont solidarisées au cadre et au châssis par l'intermédiaire de deux liaisons pivot (R5 au niveau du cadre, R6 au niveau du châssis). Les liaisons pivot (R5) sont positionnées approximativement au niveau de la traverse supérieure (C4) du cadre. Les liaisons pivot (R6) sont quant à elles situées sur le longeron droit d'une part et sur le longeron gauche d'autre part, approximativement au niveau de la traverse avant (A3). Lors des opérations de chargement et de déchargement, le mouvement des biellettes (PB) est également un mouvement d'arc de cercle autour d'un axe matérialisé par la liaison pivot R6 (illustrée en pointillé sur la figure 4).

Ainsi, le cadre effectue globalement un mouvement de rotation/translation lui permettant de passer de la première position de chargement à la deuxième position de roulage.

Pour faciliter le déplacement du cadre, deux galets (G) sont fixés sur le châssis (A). Ces deux galets, libres en rotation, sont positionnés de sorte qu'ils se trouvent sous les longerons C1 et C2 du cadre (il y a un galet par longeron). Ainsi, lors du déplacement du cadre, celui-ci ne frotte pas contre le châssis, mais glisse sur les galets (G).

Le dispositif comprend également des moyens de mise en mouvement du chariot (C) pour assurer le chargement et le déchargement du véhicule à deux roues.

En référence à ces figures, l'ensemble les éléments de la remorque: Le châssis (A), le chariot (C), le berceau (R), les biellettes (GB, PB), peuvent d'être réalisés par assemblage métallique acier ou alu, soudé ou boulonné ou encore en matériau composites moulés et collés.

Les longerons du châssis de la remorque reçoivent les axes de rotation et supports des galets (G) ainsi que les axes de rotations des premières biellettes (PB) et des deuxièmes biellettes (GB) de guidage des chariots (C) et berceau (R).

Les galets (G) de support et guidage du chariot sont réalisés dans un matériau métallique ou composite capable de résister aux contraintes de roulage et guidage engendrés par la charge à transporter.

Le guidage du chariot (C) est assuré par l'ensemble constitué par les biellettes (PB), deuxièmes biellettes (GB) et galets (G). Plus particulièrement, les galets (G) permettent de réaliser un guidage du châssis, afin que celui-ci conserve une orientation préalablement définie lors des mouvements du châssis.

Les mouvements de montée et descente du chariot (C) sont générés, dans un mode de réalisation, par la force de traction du treuil (T), l'extrémité du câble étant fixée sur le châssis, la démultiplication obtenue avec le renvoi d'une poulie permet d'utiliser un treuil de faible dimension. Le treuil peut être un treuil manuel ou un treuil électrique relié au véhicule tracteur ou comprenant une batterie autonome. Dans un autre mode de réalisation, le treuil étant fixé sur le timon (AT), il n'y a pas de poulie de renvoi (P).

Deux ressorts (CR) ancrés en partie basse sur le chariot (C) et en partie haute sur les deuxièmes biellettes (GB) permettent d'amortir la descente du chariot en fin de course de chargement et de déchargement.

Dans un mode de réalisation particulier (non représenté), deux tampons de caoutchouc (B) fixés sur la traverse avant du châssis (A) ainsi que deux appuis (AP) servent de butée de fin de course. Un verrouillage de sécurité de l'ensemble (chargé ou non) en position route (c'est-à-dire lorsque le chariot est relevé) est assuré par un ou deux verrous (V) dont les axes se logent dans les pièces d'appui (AP) fixées sur les longerons du châssis (A).

Le berceau (R) est équipée d'une plate forme de chargement (R3) qui peut être adapté à la charge à transporter, par exemple plateforme pour bagages, ou rail pour les véhicules deux ou trois roues.

La plate forme de chargement (R3) est équipée d'un ou deux verrous (V) de blocage de mouvement du chariot pendant le roulage. Elle est aussi équipée d'anneaux et de mousses de protection permettant d'attacher facilement la charge sans risques de dommages.

En outre ce chariot peut être équipé d'une plate-forme permettant de recevoir une charge complémentaire amovible légère telle que 1 ou 2 vélos, ou encore une male qui peuvent être chargés manuellement lorsque le chariot est en position de roulage (route).

En d'autres termes, ce dispositif se présente sous la forme d'une remorque qui est équipée d'un chariot (C) supporté et guidé par des galets (G) fixés sur les longerons du châssis (A), il est guidé, de manière longitudinale par deux premières biellettes (PB) reliées au châssis (A). Le mouvement est généré par un treuil (T). Un berceau (R) de guidage et de maintien est relié au chariot (C) et au châssis (A) par l'intermédiaire de deux deuxièmes biellettes (GB). La plateforme de chargement (R3) est solidaire du berceau (R).

Le dispositif et la remorque sur laquelle il peut être monté est particulièrement destinée au transport de charges telles que moto, scooter ou bagages derrière un camping-car, un fourgon ou tout autre véhicule automobile préalablement équipé.

Plus particulièrement, le dispositif comprend un chariot (C) composé de deux longerons, un longeron droit (C1), un longeron gauche (C2) reliés par deux traverses, une traverse supérieure (C4) et une traverse inférieure (C3).

Ce chariot (C) se déplace sur les galets (G) tournant librement sur des axes fixés sur les longerons du châssis (A) de la remorque et le chariot est guidé latéralement par ces galets (G).

Les deux premières biellettes (PB) pivotantes sont ancrés sur les longerons du chariot (C) d'une part et sur les longerons de châssis (A) d'autre part. La fonction de ces deux premières biellettes (PB) est d'assurer le guidage longitudinal du chariot(C).

Le mouvement de levage est assuré par un treuil (T) qui peut être manuel ou électrique fixé sur la traverse supérieure du chariot (C4) et une poulie (P) de renvoi situé sur la traverse inférieure (C3). Dans un autre mode de réalisation, Le treuil est fixé sur le timon (AT) et il n'y a pas de poulie de renvoi (P).

La remorque comprend un berceau (R) dont la partie basse est reliée par deux axes (R1), en rotation libre, sur le chariot. La partie haute est reliée au châssis (A) par deux deuxièmes biellettes (GB) pivotantes dont la fonction est d'assurer le guidage longitudinal du berceau (R).

La fonction de l'ensemble formé par le chariot (C), les biellettes (PB) et le treuil (T) est de descendre le seuil de chargement (R3) au contact du sol et ainsi faciliter la mise en place de la charge.

Ces caractéristiques permettent d'assurer une orientation constante de la charge par rapport au châssis/sol pendant toute la phase de chargement / déchargement; du départ au sol à l'arrivée sur le chariot et inversement, ainsi que pendant le roulage, éliminant ainsi les risques de déséquilibre de la charge. En outre le chargement peut s'effectuer sans effort ni risque par une personne réalisant seule l'opération.

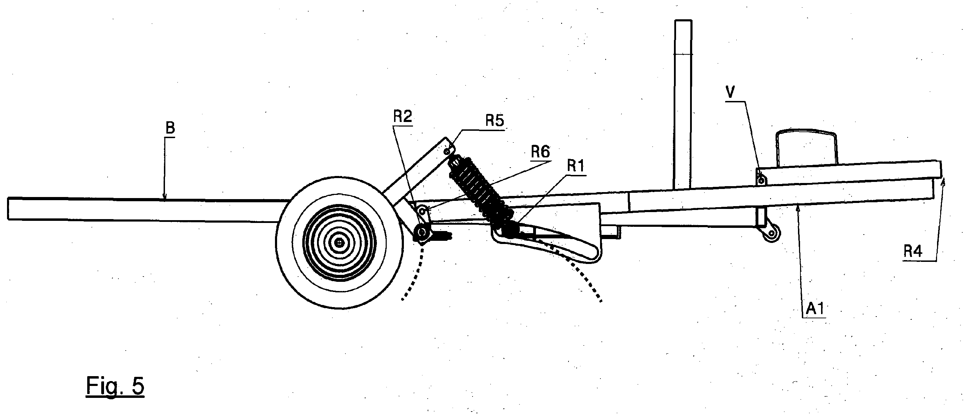

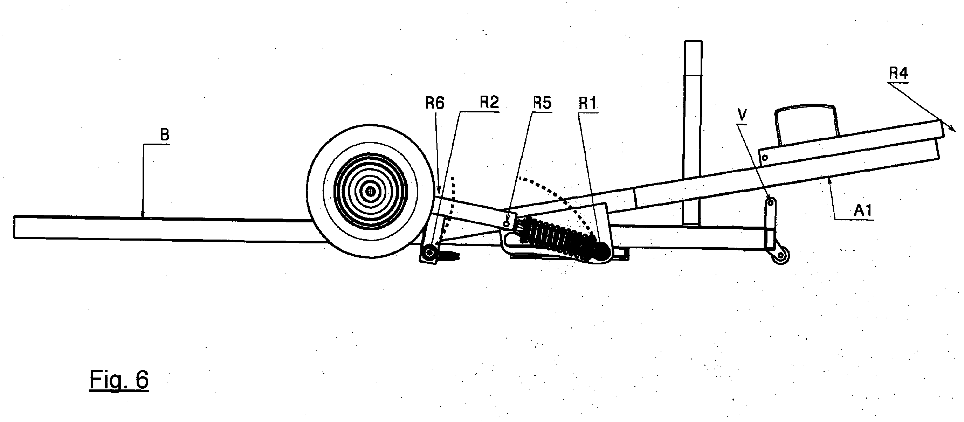

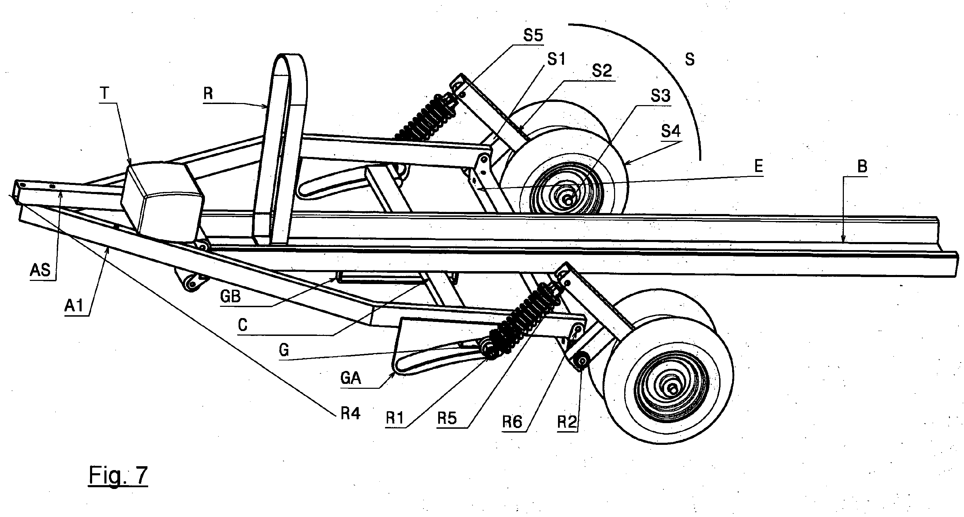

Les figures 5, 6 et 7 représentent un deuxième mode de réalisation du dispositif selon l'invention dans lequel la charge est positionnée selon le même axe que l'axe de déplacement de la remorque sur laquelle le dispositif est positionné. Les références numériques et les explications données restent valables pour ce mode de réalisation de l'invention. L'avantage de ce mode de réalisation est de permettre le chargement de charges plus lourdes et/ou plus longues que dans le premier mode de réalisation.

### 5.3. Présentation générale d'une remorque

La remorque présentée ci-après peut être utilisée pour recevoir un dispositif d'aide au chargement tel que présenté préalablement.

Le principe général à la base de l'invention est de munir la remorque d'au moins un point de fixation supplémentaire au véhicule tracteur. Toutefois, à la différence des solutions de l'art antérieur, et notamment des solutions proposées dans les documents FR2940629 et US5520404, l'adjonction de ce point de fixation supplémentaire au véhicule tracteur est mis en oeuvre afin que les inconvénients des solutions antérieures soient résolus. Plus particulièrement, l'adjonction du deuxième (et éventuellement du troisième) point de fixation est réalisé de sorte que le mouvement de roulis du véhicule n'est pas transmis à la remorque. Ainsi, l'ajout du deuxième point de fixation permet de bloquer le mouvement horizontal de pivotement de la remorque par rapport au véhicule tracteur, et ainsi de faciliter d'une part les manoeuvres en marche arrière (comme la remorque ne pivote pas elle ne risque pas de percuter le véhicule tracteur lors d'une manoeuvre par exemple) ; d'autre part, le deuxième point de fixation permet d'assurer une bonne position de lors du roulage, en évitant un phénomène de « lacet ».

Cependant, à la différence des techniques de l'art antérieur, le point de fixation supplémentaire mis en oeuvre dans l'invention autorise le mouvement de roulis de la remorque par rapport au véhicule tracteur. Ceci est rendu possible grâce à la manière dont la remorque selon l'invention est attachée au véhicule tracteur. Pour ce faire, plutôt que de proposer une double attache fixe comme cela est le cas de la technique des documents FR2940629 et US5520404, l'invention utilise une tête d'attelage centrale normalisée. Cette tête d'attelage centrale normalisée est classiquement l'unique moyen qui est mis en oeuvre pour attacher une remorque à un véhicule tracteur (comme une automobile). L'avantage d'une fixation à cette tête d'attelage est qu'elle autorise le mouvement de roulis de la remorque, ce qui est extrêmement important. Classiquement, le timon central de la remorque est attaché à cette tâte d'attelage centrale.

La remorque selon l'invention possède une deuxième fixation, qui se présente sous la forme d'une biellette qui est d'une part solidarisée au châssis par l'intermédiaire d'une liaison pivot et d'autre part solidarisée au véhicule par l'intermédiaire d'une deuxième liaison pivot. Cette deuxième liaison pivot peut être soit directement intégrée au véhicule tracteur soit être intégrée sur un support intermédiaire qui est lui-même fixé au véhicule. Dans ce deuxième cas, le support intermédiaire intègre également la tête d'attelage centrale normalisée. Plus particulièrement, les premières et deuxièmes liaisons pivot sont sensiblement situées dans le même axe, parallèle à l'axe de déplacement du véhicule auquel la remorque est attachée (matérialisé par l'axe du timon central). Par rapport à l'axe du timon central, l'ensemble constitué de la biellette et des deux liaisons pivots est situé soit à gauche soit à droite de cet axe. L'ensemble constitué de la biellette et des deux liaisons pivots peut, selon l'invention, adopter un mouvement vertical, mouvement qui est indexé par rapport au roulis de la remorque. Cet ensemble ne peut cependant pas latéralement (i.e. par rapport au plan défini par le châssis de la remorque) ce qui évite les mouvements de lacets.

De plus, selon l'invention, compte tenu de l'impossibilité d'imprimer un mouvement latérale à la remorque à cause de l'ensemble constitué de la biellette et des deux liaisons pivots, la remorque est munie de deux ensembles roulant à suspension. Ces ensembles roulants, comprenant une ou deux roues peuvent pivoter à 360° autour d'un axe afin de faciliter la manoeuvre de l'ensemble constitué du véhicule tracteur et de la remorque.

Selon une première caractéristique, l'axe de pivotement de l'ensemble roulant présente un angle α par rapport à l'axe vertical. Cet angle permet de supprimer les mouvements de guidonnage des ensembles de roues et permet de favoriser la stabilité pendant le roulage. Son rôle est également de compenser l'affaissement des suspensions, pendant une rotation à 360° des roues pivotantes (par exemple lors des manoeuvres en marche arrière), l'affaissement des suspensions étant dû au changement de position de l'appui des roues par rapport au centre de gravité de la charge.

Selon une deuxième caractéristique, l'ensemble roulant comprend deux roues qui sont positionnées de part et d'autre du monobras de suspension de l'ensemble roulant. Ces deux roues permettent d'une part d'assurer une plus grande stabilité de la remorque et assure que la crevaison d'une des deux roues de l'ensemble roulant ne compromette pas la sécurité de la remorque.

### 5.4. Présentation d'un mode de réalisation d'une remorque

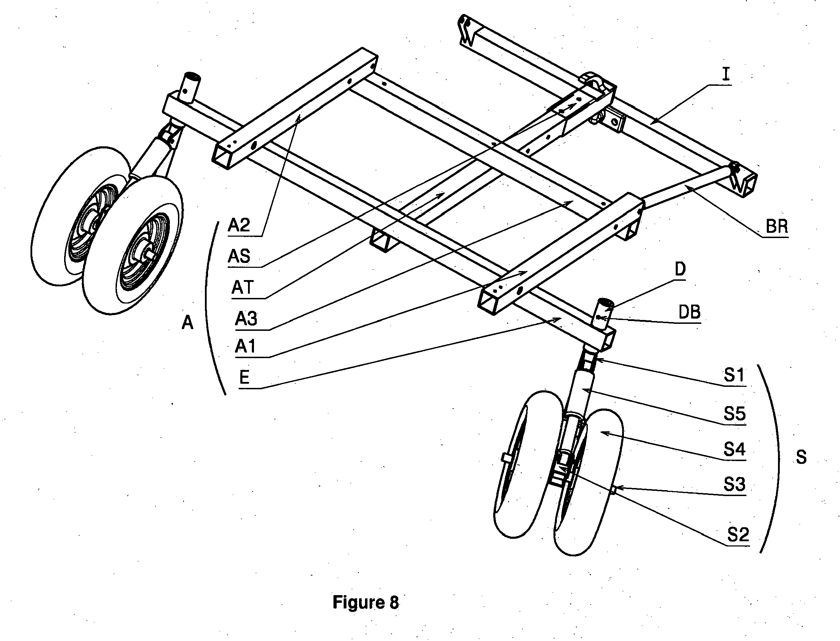

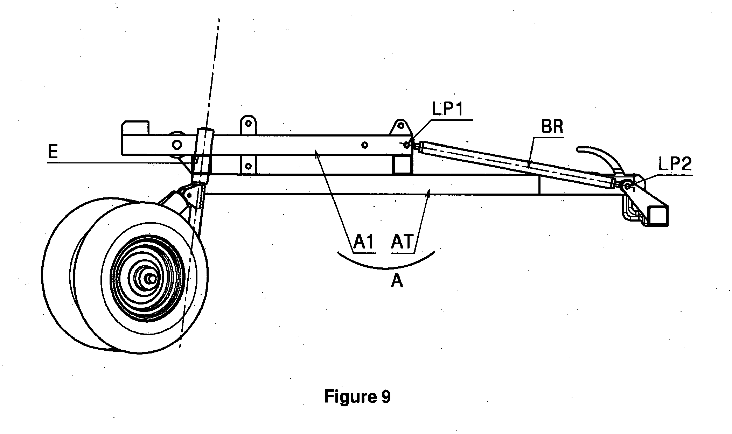

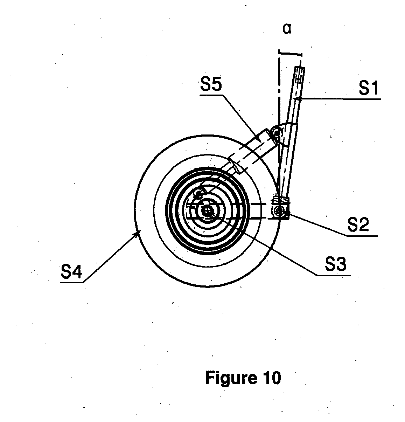

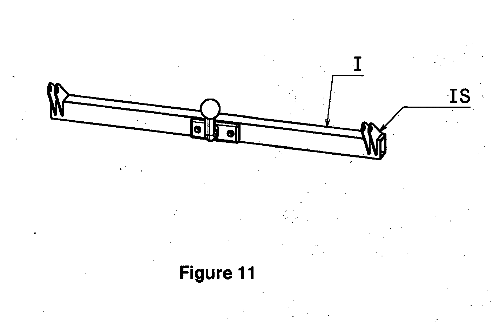

Pour des raisons de clarté des dessins, les éléments tels que boulonnerie, câbles électrique, feux de route, plaque d'immatriculation, roue jockey, plancher, sangles d'arrimage et véhicule tracteur ne figurent pas sur les figures 8 à 11 qui décrivent la remorque.

La remorque comprend un châssis (A) relié au véhicule tracteur par un attelage standard (AS) et par une (ou deux) biellette à rotule (BR). L'essieu (E) de la remorque est incliné par rapport au châssis (C), il est équipé de deux ensembles roulants à suspension (S) pivotants à 360° et à roues jumelées (S4).

Le châssis peut recevoir tous types de plateforme de chargement, mobile ou fixe.

Cette remorque est particulièrement destinée au transport de charges telles que moto, scooter ou bagages, tractée par un camping-car, fourgon ou berline.

Le châssis (A) comprend principalement: un timon central (AT), deux longerons, un droit (A1) et un gauche (A2), un essieu (E) et une traverse avant (A3). Le timon central (AT) reçoit la tête d'attelage standard normalisée (AS) qui se verrouille sur une boule d'attelage du commerce standard. L'un ou l'autre des longerons (ou les deux), est relié, suivant une première caractéristique, par une biellette à rotule (BR), soit directement au châssis du véhicule tracteur, soit à un support intermédiaire (I) fixé lui-même sur l'attache remorque du véhicule tracteur. Cette biellette à rotule comprend deux liaisons pivot (Ip1, lp2) qui autorise un déplacement vertical de la biellette. Ce système permet de bloquer tout mouvement horizontal de pivotement de la remorque par rapport au véhicule tracteur sans qu'il lui impose ses mouvements de roulis.

Dans un mode de réalisation, l'essieu transversal (E) est solidaire du châssis (A), et selon une deuxième caractéristique est incliné par rapport aux longerons (A1, A2) afin de donner par construction un angle de chasse (angle α). Cet angle de chasse permet de supprimer les mouvements de guidonnage des ensembles de roues. Préférentiellement, cet angle de chasse α à une valeur de 7° (par rapport à l'axe vertical), mais il peut être compris entre 5° et 10°.

L'essieu (E) possède à chaque extrémité deux douilles (D) de guidage en rotation libre à 360° des axes de pivot (S1) des ensembles roulants à suspensions (S).

Dans un autre mode de réalisation, ce n'est pas l'essieu qui est incliné d'un angle α, mais l'axe des moyens de guidage (en l'occurrence les douilles (D)). L'essieu n'est donc pas incliné.

Ces ensembles roulants à suspensions (S) sont constitués chacun selon une troisième caractéristique d'un mono bras de suspension (S2) composé d'un tube oscillant par rapport au pivot (S1), d'un arbre de roue (S3), de 2 roues (S4) jumelées de part et d'autre du bras (S2) et d'un combiné ressort/amortisseur (S5) ancré entre le pivot et le bras de suspension. Ces ensembles roulants à suspension à roues jumelées apportent la stabilité et sécurité «crevaison» pendant le roulage. Le pivot (S1) est également incliné d'un angle sensiblement équivalent à l'angle α afin que le châssis de la remorque soit parallèle à la route.

L'ensemble les éléments de la remorque, le châssis (A), les éléments de suspensions (S), le support intermédiaire (I),et les biellettes (BR) peuvent d'être réalisés par assemblage métallique acier ou alu, soudé ou boulonné ou encore en matériau composites moulés et collés.

La fonction de la(ou des) biellette(BR) est, couplée avec la tête d'attelage centrale (AS), de bloquer tout mouvement horizontal de pivotement de la remo²rque par rapport au véhicule tracteur, et ainsi faciliter les manoeuvres en marche arrière. L'autre fonction de cet agencement est même temps d'autoriser les mouvements de roulis du véhicule tracteur par rapport à la remorque et inversement, éliminant de ce fait les contraintes dues au roulis de l'ensemble tracteur/remorque sur les roues et suspensions de la remorque lorsque celle-ci est reliée au véhicule tracteur par un système à deux attelages rencontré dans l'art antérieur.

La variante de réalisation de l'invention avec deux biellettes (BR) nécessite que le support (I) soit pourvu de fixations (IS) des biellettes dont les axes sont alignés avec celui de la boule centrale d'attelage standard, afin de ne pas brider les mouvements de la remorque par rapport au véhicule tracteur.

L'angle de chasse (α) de l'essieu (E) par rapport aux longerons est obtenu lors de l'assemblage. Son rôle est de supprimer les mouvements de guidonnage des ensembles de roues et ainsi de favoriser la stabilité pendant le roulage. Son rôle est également de compenser l'affaissement des suspensions, pendant une rotation à 360° des roues pivotantes (par exemple lors des manoeuvres en marche arrière), du au changement de position de l'appui des roues par rapport au centre de gravité de la charge.

Les guidages en rotation des pivots (S1) et axes de bras de suspensions (S2) sont obtenus par des roulements ou des bagues composites. Les roues (S4) bien que jumelées de part et d'autre du mono-bras de suspension (S2) peuvent êtres démontées de manière indépendante.

Le combiné ressort/amortisseur est ancré en partie supérieure sur le pivot (S1) et en partie inférieure sur le mono-bras de suspension (S2).

Le châssis peut recevoir tous types de plateforme de chargement fixe ou mobile, longitudinale ou transversale, par exemple : Rail guide pour véhicule à deux roues, moto, scooter, cyclomoteur... ou pour véhicule à trois ou quatre roues, scooter MP3™, quads... Il peut également s'agir d'une plateforme simple permettant de transporter des charges diverses, bagages, objets divers.

Le châssis peut aussi recevoir un système de montée/descente de la charge au sol afin de faciliter cette opération.

Selon des modes de réalisation et d'utilisation différents, le châssis peut avoir une forme différente, et posséder plusieurs essieux et ensembles roulants à suspensions.

Les caractéristiques préalablement décrites apportent plusieurs avantages par rapport aux remorques actuelles à roues simples pivotantes ou non :
- manoeuvres plus aisées notamment les manoeuvres en marche arrière, la charge est répartie sur quatre roues au lieu de deux ce qui diminue le poids par roue et facilite donc le pivotement des ensembles suspension (S) notamment sur sol meuble ou chaotique ;
- sécurité augmentée; une crevaison non décelée pendant le roulage n'a pas ou peu d'incidence, et en tout état de cause n'induit pas un besoin d'arrêt immédiat du véhicule ;
- stabilité accrue; pendant le roulage, la charge est répartie sur quatre roues au lieu de deux, il y a donc moins de prise de roulis ;
- usure des pneumatiques réduite car le guidonnage est totalement éliminé , il n'y pas besoin se système de frein en rotation nécessitant des réglages, la rotation des pivots est totalement libre et n'engendre donc pas de ripage lors de la rotation à 360° pendant les manoeuvres de marche arrière. La réalisation technique s'en trouve nettement simplifié.
- facilité d'attelage, l'attelage s'effectue de la même manière qu'un remorque traditionnelle, en effet les systèmes à 2 boules nécessitent d'enclencher les 2 systèmes simultanément, donc d'avoir une position parfaite en alignement.
- modularité des caractéristiques de roulage ; cette remorque peut être utilisée de 2 façons:
   - Comme une remorque à roues pivotantes lorsque l'on utilise la biellette à rotule (BR)
   - Comme une remorque traditionnelle lorsque que l'on n'utilise pas la biellette à rotule (BR) à condition de bloquer la rotation des ensembles roulants à suspension par la mise en place de doigts de blocage (DB) sur les axes de pivots.

## Revendications

1. Dispositif de chargement, ledit dispositif comprenant une structure de support (A) d'un berceau (R) comprenant une base de chargement (R3), le berceau étant est mobile par rapport à la structure de support et le berceau pouvant être déplacé entre deux positions :
- une première position de chargement, dans laquelle la base de chargement (R3) repose sur le sol ;
- une deuxième position de roulage, dans laquelle le berceau (R) est porté sur la structure de support (A),
Le dispositif comprenant des moyens de déplacement dudit berceau entre lesdites positions en maintenant l'orientation dudit berceau constante,
lesdits moyens de déplacement comprenant au moins une paire de liaisons pivots comprenant une liaison pivot basse (R1) sensiblement proche de ladite base de chargement (R3) et une liaison pivot haute (R2) sensiblement proche de la partie supérieure dudit berceau (R), des moyens de solidarisation (GB, PB) dudit berceau (R) à ladite structure de support (A) par l'intermédiaire de ladite paire de liaisons pivots (R1, R2), le maintien de l'orientation dudit berceau lors du passage entre lesdites positions étant assuré en effectuant un mouvement de rotation desdits moyens de solidarisation (GB, PB), lesquels provoquent un mouvement de translation du berceau par l'intermédiaire de ladite paire de liaisons pivots,
Le dispositif étant **caractérisé en ce qu'**il comprend en outre un chariot (C) mobile en translation par rapport au support (A), ledit chariot étant solidarisé au berceau (R) par l'intermédiaire de ladite liaison pivot basse (R1) et solidarisé auxdits moyens de solidarisation (PB) par l'intermédiaire d'une liaison pivot complémentaire (R5)

2. Dispositif selon la revendication 1 **caractérisé en ce que** le chariot (C) se déplace sur des galets (G) et est guidé latéralement par lesdits galets (G) lors du déplacement entre lesdites positions.

3. Dispositif selon l'une quelconque des revendications 1 et 2, **caractérisé en ce que** le déplacement entre lesdites positions est mis en oeuvre par l'intermédiaire d'un treuil.

4. Remorque de transport de charges destinée à être attelée avec un véhicule, **caractérisée en ce qu'**elle comprend un dispositif de chargement selon la revendication 1.

5. Remorque de transport selon la revendication 4, ladite remorque comprenant un châssis comprenant un attelage central standard (AS) fixé sur un timon central (AT), remorque **caractérisée en ce qu'**elle comprend en outre une liaison avec ledit véhicule par l'intermédiaire d'au moins une biellette à rotules (BR), ladite biellette à rotule comprenant à chacune de ses extrémités une liaison pivot (Ip1, lp2), ladite biellette à rotule étant sensiblement parallèle à l'axe dudit timon central et n'autorisant qu'un mouvement vertical dudit châssis par rapport audit véhicule.

6. Remorque selon la revendication 5, **caractérisé en ce qu'**elle comprend en outre au moins deux ensembles roulants à suspensions (S), chacun fixé à une extrémité d'un essieu (E) dudit châssis, un ensemble roulant à suspension (S) comprenant un pivot de rotation (S1) dudit ensemble roulant, ledit pivot de rotation (S1) étant incliné d'un angle α par rapport à l'axe vertical..

7. Remorque selon la revendication 6, **caractérisé en ce que** chacun desdits ensembles roulant à suspension (S) possède deux roues jumelées (S4) disposées de part et d'autre du bras de suspension (S2) et un combiné ressort/amortisseur central (S5).

8. Remorque selon l'une quelconque des revendications 5 ou 6, **caractérisé en ce que** l'angle α est compris entre 5° et 10°.

9. Remorque selon l'une quelconque des revendications 5 ou 6, **caractérisé en ce que** l'angle α est sensiblement égal à 7°.

## Patentansprüche

1. Ladevorrichtung, wobei die Vorrichtung eine Tragstruktur (A) für einen Wagen (R) besitzt, umfassend eine Ladebasis (R3), wobei der Wagen in Bezug zur Tragstruktur beweglich ist, und wobei der Wagen zwischen zwei Positionen verschoben werden kann:
- einer ersten Ladeposition, in der die Ladebasis (R3) auf dem Boden liegt;
- einer zweiten Fahrposition, in der der Wagen (R) auf der Tragstruktur (A) getragen wird,
wobei die Vorrichtung Mittel zum Verschieben des Wagens zwischen den Positionen umfasst, wobei die Ausrichtung des Wagens konstant gehalten wird,
wobei die Verschiebemittel mindestens ein Paar von Schwenkverbindungen besitzen, umfassend eine untere Schwenkverbindung (R1) im Wesentlichen in der Nähe der Ladebasis (R3) und eine obere Schwenkverbindung (R2) im Wesentlichen in der Nähe des oberen Teils des Wagens (R), Mittel zur Verbindung (GB, PB) des Wagens (R) mit der Stützstruktur (A) mit Hilfe des Paars von Schwenkverbindungen (R1, R2), wobei die Beibehaltung der Ausrichtung des Wagens beim Übergang zwischen den Positionen sichergestellt wird, indem eine Drehbewegung der Verbindungsmittel (GB, PB) ausgeführt wird, die eine Translationsbewegung des Wagens mit Hilfe des Paars von Schwenkverbindungen hervorrufen,
wobei die Vorrichtung **dadurch gekennzeichnet** ist, das sie ferner einen in Bezug zur Stütze (A) in Translation beweglichen Schlitten (C) umfasst, wobei der Schlitten mit dem Wagen (R) mit Hilfe der unteren Schwenkverbindung (R1) verbunden ist und mit den Verbindungsmitteln (PB) mit Hilfe einer zusätzlichen Schwenkverbindung (R5) verbunden ist.

2. Vorrichtung nach Anspruch 1, **dadurch gekennzeichnet, dass** sich der Schlitten (C) auf Rollen (G) bewegt und seitlich von den Rollen (G) bei der Verschiebung zwischen den Positionen geführt wird.

3. Vorrichtung nach einem der Ansprüche 1 und 2, **dadurch gekennzeichnet, dass** die Verschiebung zwischen den Positionen mit Hilfe einer Winde durchgeführt wird.

4. Lastentransportanhänger, der dazu bestimmt ist, an ein Fahrzeug angehängt zu werden, **dadurch gekennzeichnet, dass** er eine Ladevorrichtung nach Anspruch 1 umfasst.

5. Transportanhänger nach Anspruch 4, wobei der Anhänger ein Gestell besitzt, umfassend eine zentrale Standardanhängevorrichtung (AS), die an einer zentralen Deichsel (AT) befestigt ist, wobei der Anhänger **dadurch gekennzeichnet ist, dass** er ferner eine Verbindung mit dem Fahrzeug mit Hilfe mindestens einer Gelenkstange (BR) umfasst, wobei die Gelenkstange an jedem ihrer Enden eine Schwenkverbindung (lp1, lp2) umfasst, wobei die Gelenkstange im Wesentlichen parallel zur Achse der zentralen Deichsel ist und nur eine Vertikalbewegung des Gestells in Bezug zum Fahrzeug gestattet.

6. Anhänger nach Anspruch 5, **dadurch gekennzeichnet, dass** er ferner mindestens zwei Fahreinheiten mit Aufhängungen (S) umfasst, die jeweils an einem Ende einer Achse (E) des Gestells befestigt sind, wobei eine Fahreinheit mit Aufhängung (S) einen Drehzapfen (S1) der Fahreinheit umfasst, wobei der Drehzapfen (S1) um einen Winkel α in Bezug zur Vertikalachse geneigt ist.

7. Anhänger nach Anspruch 6, **dadurch gekennzeichnet, dass** jede der Fahreinheiten mit Aufhängung (S) zwei Zwillingsräder (S4), die beiderseits des Aufhängungsarms (S2) angeordnet sind, und eine kombinierte Feder/Dämpfereinheit (S5) besitzt.

8. Anhänger nach einem der Ansprüche 5 oder 6, **dadurch gekennzeichnet, dass** der Winkel α zwischen 5° und 10° beträgt.

9. Anhänger nach einem der Ansprüche 5 oder 6, **dadurch gekennzeichnet, dass** der Winkel α gleich 7° ist.

## Claims

1. Loading device, the said device comprising a structure (A) for support of a cradle (R) comprising a loading base (R3), the cradle being mobile relative to the support structure and the cradle being able to be displaced between two positions, i.e.
- a first, loading position, in which the loading base (R3) is resting on the ground;
- a second, rolling position, in which the cradle (R) is supported on the support structure (A), the device comprising means for displacement of the said cradle between the said positions, whilst maintaining constant the orientation of the said cradle,
the said means for displacement comprising at least one pair of pivot connections comprising a low pivot connection (R1), which is substantially close to the said loading base (R3), and a high pivot connection (R2), which is substantially close to the upper part of the said cradle (R), means (GB, PB) for rendering the said cradle (R) integral with the said support structure (A) by means of the said pair of pivot connections (R1, R2), the maintenance of the orientation of the said cradle during the passage between the said positions being ensured by performing a movement of rotation of the said means (GB, PB) for rendering integral, which give rise to a movement of translation of the cradle by means of the said pair of pivot connections,
the device being **characterised in that** it also comprises a carriage (C) which is mobile in translation relative to the support (A), the said carriage being rendered integral with the cradle (R) by means of the said low pivot connection (R1), and being rendered integral with the said means (PB) for rendering integral by means of a supplementary pivot connection (R5).

2. Device according to claim 1, **characterised in that** that the carriage (C) is displaced on rollers (G), and is guided laterally by the said rollers (G) during the displacement between the said positions.

3. Device according to either of claims 1 and 2, **characterised in that** the displacement between the said positions is implemented by means of a winch.

4. Trailer for transporting loads which is designed to be coupled to a vehicle, **characterised in that** it comprises a loading device according to claim 1.

5. Transport trailer according to claim 4, the said trailer comprising a chassis comprising a standard central drawbar (AS) which is secured on a central drag bar (AT), which trailer is **characterised in that** it additionally comprises a connection to the said vehicle by means of at least one ball joint connecting rod (BR), the said ball joint connecting rod comprising a pivot connection (lp1, lp2) at each of its ends, the said ball joint connecting rod being substantially parallel to the axis of the said central drag bar, and permitting only vertical movement of the said chassis relative to the said vehicle.

6. Trailer according to claim 5, **characterised in that** it additionally comprises at least two rolling assemblies with suspension (S), each secured at one end of an axle (E) of the said chassis, a rolling assembly with suspension (S) comprising a pivot (S1) for rotation of the said rolling assembly, the said rotation pivot (S1) being inclined by an angle α relative to the vertical axis.

7. Trailer according to claim 6, **characterised in that** each of the said rolling assemblies with suspension (S) has two twin wheels (S4) which are disposed on both sides of the suspension arm (S2), and a central combined spring / shock-absorber unit (S5).

8. Trailer according to either of claims 5 or 6, **characterised in that** the angle α is between 5° and 10°.

9. Trailer according to either of claims 5 or 6, **characterised in that** the angle α is substantially equal to 7°.
